# EUROPÄISCHE PATENTSCHRIFT

(11) **EP 3 123 131 B1**
(45) Veröffentlichungstag und Bekanntmachung des Hinweises auf die Patenterteilung: **11.09.2019**
(21) Anmeldenummer: 15701729.4
(22) Anmeldetag: 21.01.2015
(51) Int. Cl.: G01L 1/20, G01L 1/22

(54) **FLEXIBLE SENSORANORDNUNG ZUR ERFASSUNG EINER DRUCKVERTEILUNG**
FLEXIBLE SENSOR ASSEMBLY FOR SENSING A PRESSURE DISTRIBUTION
ENSEMBLE FLEXIBLE DE CAPTEURS POUR DÉTECTER UNE RÉPARTITION DE PRESSION

(30) Priorität: 28.03.2014 DE 102014205825
(43) Veröffentlichungstag der Anmeldung: 01.02.2017
(73) Patentinhaber: ContiTech AG, 30165 Hannover (DE)
(72) Erfinder: SOSTMANN, Stefan, 30855 Langenhagen (DE); WIETZKE, Steffen, 31311 Uetze (DE); HERRMANN, Wolfram, 31515 Wunstorf (DE); PAULSEN, Hans-Peter, 37079 Göttingen (DE)
(74) Vertreter: Finger, Karsten
(86) Internationale Anmeldenummer: PCT/EP2015/051049
(87) Internationale Veröffentlichungsnummer: WO 2015/144324

(56) Entgegenhaltungen:
- EP-A2- 0 161 895
- EP-A2- 2 698 616
- DE-A1- 19 859 507
- DE-A1-102010 034 717
- GB-A- 2 137 022
- US-A- 5 311 779
- US-A1- 2014 035 603

## Beschreibung

Die Erfindung betrifft eine flexible Sensoranordnung zur Erfassung einer Druckverteilung gemäß dem Oberbegriff des Anspruchs 1, eine Messanordnung mit einer derartigen Sensoranordnung sowie ein Verfahren zur Erfassung einer Druckverteilung mittels einer derartigen Messanordnung.

Bei der Herstellung von Elastomerprodukten, d.h. Artikel aus Gummi bzw. mit Gummi als Bestandteil, wird meistens eine Vulkanisation des Vor- bzw. Zwischenproduktes durchgeführt, um dem Elastomermaterial seine elastischen Eigenschaften zu verleihen. Bei der Vulkanisation wird sowohl Hitze als auch Druck auf das Vor- bzw. Zwischenprodukt ausgeübt. Bei diesem Vorgang wird bisher üblicherweise lediglich der Schließdruck gemessen bzw. geregelt, welcher von außen auf die Werkzeuge aufgebracht wird.

Hierdurch bleiben die tatsächlich in dem Produkt während der Vulkanisation auftretenden Druckverhältnisse, insbesondere deren ein- oder zweidimensionale Verteilung, unbekannt. Dies gilt ebenso für die Kraftverhältnisse, d.h. deren ein- oder zweidimensionale Verteilung, da Druck als Kraft pro Fläche definiert ist.

Da die Druckverteilung während der Vulkanisation jedoch Auswirkungen auf die Qualität des Prozesses hat, wäre es vorteilhaft, diese zu erfassen und den Prozess entsprechend optimieren zu können. Auch wäre es für die Qualitätssicherung vorteilhaft, die Druckverteilung bei der Herstellung eines Produktes überprüfen und dokumentieren zu können. Insbesondere wäre es bei der Entwicklung neuer Elastomerprodukte vorteilhaft, diese Druckverteilung erfassen zu können, um reproduzierbare Druckverhältnisse bei der Vulkanisation zu gewährleisten und so Parameterschwankungen dieser Prozessgröße ausschließen und die Einflüsse anderer Parameter auf die Produktentwicklung besser beurteilen zu können. Um ungewollte Ungleichmäßigkeiten sowohl der Werkzeuge als auch des Vor- bzw. Zwischenproduktes ausgleichen zu können, wäre es ferner vorteilhaft, wenn die Druckerfassung über eine flexible Anordnung von Messstellen erfolgen könnte, welche sich der Form und Oberfläche des Werkzeugs und bzw. oder des Vor- bzw. Zwischenproduktes anpassen kann. Diese Flexibilität ist aber auch vorteilhaft, damit sich die Sensoranordnung an gewollt ungleichmäßig gestalteten Werkzeugkonturen wie Freiformflächen anschmiegen kann, um auch bei derartigen Werkzeugen, vorzugsweise nach einer Kalibrierung, eine Druckverteilung erfassen zu können.

Aus der EP 2 394 623 A1 ist eine flexible Vorrichtung zur Ermittlung einer Position und eines Druckes einer liegenden Person in einem Bett bekannt. Es soll ein Wundliegen vermieden werden, indem die durch das Gewicht der liegenden Person belasteten Stellen auf der Liegefläche der Matratze erkannt werden. Hierzu wird eine Messanordnung zur flächigen Druckermittlung vorgeschlagen, welche eine erste Vielzahl parallel zueinander angeordneter bandförmiger Elektroden aufweist, die durch einen dünnen elastischen Film von einer zweiten Vielzahl parallel zueinander angeordneter bandförmiger Elektroden in Richtung der Druckausübung voneinander beabstandet sind.

Die Ausrichtung der beiden Elektrodenanordnungen ist senkrecht zueinander, so dass sich ein Kreuzgitter (Matrix) von Sensorelementen ergibt. Zwischen den einzelnen Elektroden der Ebenen wird jeweils eine Wechselspannung angelegt, so dass für jedes Sensorelement jeweils die Kapazität zwischen den Elektroden der beiden Ebenen bestimmt werden kann, die vom Abstand der Ebenen, d. h. der Dicke des dazwischenliegenden dünnen elastischen Films, abhängt. Unter Druck verringert sich der Abstand zwischen den beiden Elektrodenanordnungen an dieser Stelle, d.h. für dieses Sensorelement, so dass die Kapazität des als Plattenkondensator wirkenden Sensorelements steigt. Bei Verwendung eines elektrisch leitfähigen Sensorfilms zwischen den einzelnen Elektroden kann auch ein elektrischer Widerstand bzw. dessen Änderung unter Druckbelastung erfasst werden. Über die Erfassung aller Sensorelemente nacheinander lässt sich eine flächige Druckverteilung bestimmen.

Um den Komfort der liegenden Person nicht zu beeinflussen, weisen die bandförmigen Elektroden sowie der elastische Film ein elastomeres Material auf. Das Elastomermaterial der Elektroden ist dabei elektrisch leitfähig. Hierbei werden z.B. EPDM (Ethylen-Propylen-Dien-Kautschuk), Silikon-Kautschuk, NR (natürliches Polyisopren), IP (synthetisches Polyisopren), NBR (Nitrilbutadienkautschuk), SBR (Styrolbutadien-Kautschuk), Acryl-Kautschuk, Epichlorhydrin, chloriertes Polyethylen oder Polyurethane verwendet.

Nachteilig ist hierbei, dass diese Messanordnung zur flächigen Druckermittlung nicht auf Anwendungsfälle wie z.B. Vulkanisationsvorgänge anwendbar ist, weil die in der EP 2 394 623 A1 verwendeten Materialien den Temperatur- und Druckverhältnissen eines Vulkanisationsvorgangs mit bis zu 180°C und bzw. oder 18 bar zumindest nicht dauerhaft standhalten können. Ferner weist diese Messanordnung einen hohen Kontaktierungs- und Verkabelungsaufwand der Elektroden auf, da diese an beiden Enden mit einer Spannungsquelle bzw. einem Spannungsmessgerät verbunden werden müssen, um eine kapazitive Druckermittlung nach diesem Messprinzip vornehmen zu können.

Es sind ferner einzelne Sensorelemente bekannt, die verschiedenartig aufgebaut sind und verschiedene Messgrößen erfassen, um hieraus den Druck in Richtung der Druckeinleitung zu erfassen:
Die JP 2006 284 331 A betrifft einen Gummisensor und eine Verfahren zur Schwingungserfassung mittels dieses Sensors. Der Sensor weist einen elastischen Gummikörper mit einem leitfähigen Füllmaterial auf, so dass eine Impedanzänderung des elastischen Gummikörpers unter Einwirkung eines Drucks von außen erfasst werden kann. Neben der Impedanz- bzw. Widerstandsänderungen können zusätzlich auch Veränderungen der Kapazität und der Induktivität erfasst werden, um die Sensitivität des Gummisensors zu verbessern.

Die JP H06 152 171 A betrifft eine Vorrichtung zur Detektion einer Blockade einer Fließdurchgangs. Über eine Widerstandsänderung eines leitfähig modifizierten Elastomers wird der dynamische Druck im Fluidkreislauf erfasst.

Die JP H11 223 544 A betrifft einen Ölqualitätsdetektor für einen Treibstofftank. Mehrere separate Sensorpads aus druckempfindlichem leitfähigem Gummi sind im Boden des Treibstofftanks eingearbeitet und fungieren als Wägezellen. Die Sensorpads führen unter dem Einfluss des Drucks des Treibstoffs eine Widerstandsänderung durch. Die Sensorpads weisen hierzu rußgefüllte (CR) Chloropren-Kautschuke, NBR (Nitrilbutadienkautschuke) oder Silikon-Kautschuke auf.

Die JP 2003 222 533 A betrifft einen druckempfindlichen Gummisensor für einen Schrittzähler in einem Schuh. Hierzu wird die Widerstandsänderung im Gummisensor unter Druck erfasst.

Nachteilig ist bei den zuvor beschriebenen einzelnen Sensorelementen zur Druckerfassung, dass diese als einzelne Sensoren konzipiert sind. Die Kombination mehrerer dieser Sensorelemente zur Erfassung einer ein- oder zweidimensionalen Druckerverteilung würde zu einem hohen Aufwand an Verkabelung und Auswertung mit entsprechenden Kosten führen. Auch wäre die Flexibilität einer solchen Anordnung nicht per se gegeben. Ferner sind die bei diesen Sensoren verwendeten Materialien ebenso wenig auf Anwendungsfälle wie z.B. Vulkanisationsvorgänge übertragbar wie die Materialien der EP 2 394 623 A1.

Des Weiteren sind Sensoren zur Druckerfassung bekannt, die auf dem piezoresistiven Prinzip beruhen, bei dem sich das Gitter eines Halbleiters oder eines Ionenkristalls (keramischer Werkstoff) verformt. Die hieraus resultierende Änderung des elektrischen Widerstands dient als messtechnische Kenngröße.

Nachteilig ist hierbei, dass sich derartige Sensoren lediglich vergleichsweise raumgreifend zu einem Sensorfeld kombinieren lassen, um eine ein- oder zweidimensionale Druckverteilung zu erfassen. Ferner handelt es sich bei den gitterbasierenden Werkstoffen von Natur aus um sehr starre Strukturen, aus denen sich keine flexiblen Folien oder Matten als Messanordnung erstellen lassen.

Generell ist das physikalische Prinzip bekannt, dass sich die elektrische Leitfähigkeit entsprechender Gummimischungen auf Basis von Silikon-Kautschuk, NBR und EPDM druckabhängig ändern kann. Jedoch ändert sich nach Durchschreiten eines kritischen Mindestdruckes der elektrischer Widerstand mit zunehmendem Druck nur noch leicht und dann auch in der entgegengesetzten Richtung. Sensoren aus diesen Materialien können somit lediglich bei Drücken unterhalb oder oberhalb des kritischen Druckes, d.h. im negativ bzw. positiv piezoelektrischen Bereich, verwendet werden, um eine eindeutige Aussage liefern zu können. Dies schränkt die Verwendbarkeit bekannter elektrisch leitfähiger Gummimischungen ein.

Die EP 0 161 895 A2 beschreibt eine Sensormatrix zum Erfassen von Druck mit einem Gitter von Leitern in einem Gewebe, wobei die Reihenleiter sich über die Spaltenleiter kreuzen, um eine Matrixanordnung von Kreuzungspunkten zu bilden. Die Reihenleiter werden von den Spaltenleitern getrennt, indem die Leiter einer oder beider Serien einzeln mit einem elektrisch teilwiderstandsfähigen Fasermaterial beschichtet werden, so dass der Widerstand zwischen den beiden Leitern an einem beliebigen Kreuzungspunkt in der Anordnung abnimmt, wenn die Leiter an diesem Kreuzungspunkt näher zusammen geführt werden. Durch den Anschluss der Leiter an eine geeignete elektrische Schaltung kann die an einem beliebigen Kreuzungspunkt aufgebrachte Kraft und die Lage dieses Kreuzungspunktes innerhalb der Sensormatrix bestimmt werden. Da die Kreuzungspunkte punktartige Messstellen ausbilden, muss für eine verlässliche Druckmessung über mehrere Kreuzungspunkte gemittelt werden. Somit können lediglich flächige Belastungen erfasst werden.

Die GB 2 137 022 A beschreibt einen taktilen Sensor zur Erfassung eines mit ihm in Kontakt stehenden Objektes. Der Sensor besteht aus mehreren Schichten, die in einer Sandwich-Anordnung angeordnet sind. Eine Deckschicht besteht aus einem flexiblen, elektrisch isolierenden Material und einer Vielzahl von parallelen, flexiblen, leitenden Stäben. Eine untere Schicht besteht aus einem elektrisch isolierenden Material und einer Vielzahl von parallelen leitenden Stäben, die sich rechtwinklig zu den leitenden Stäben der oberen Schicht erstrecken, wodurch eine sensorische Anordnung gebildet wird, die eine Vielzahl von überlagerten Schnittpunkten umfasst, die in einem Gittermuster angeordnet sind. Eine Zwischenschicht besteht aus einem elastischen, elektrisch isolierenden Material, in dem eine Vielzahl von parallelen leitenden Pfosten angeordnet ist, die sich senkrecht zur Ebene der drei Schichten erstrecken. Diese Pfosten bestehen aus einem elastischen, leitenden Material. Jeder leitende Pfosten ist an einem der oben genannten Schnittpunkte des Sensors angeordnet, um einen der leitenden Stäbe der oberen Schicht mit einem der leitenden Stäbe der unteren Schicht elektrisch zu verbinden. Die leitenden Stäbe sind mit einem ausgewählten Querschnitt ausgebildet, so dass Änderungen der auf den Sensor ausgeübten Druckmenge einen entsprechenden logarithmischen Austausch in der Kontaktfläche und damit einen elektrischen Kontaktwiderstand zwischen den leitenden Stäben und den unter den Druckpunkten angeordneten leitenden Pfosten bewirken.

Die US 2014 035 603 A1 beschreibt ein gemusterter Artikel mit einem verformbaren, nicht leitfähigen Substrat, einem bildmäßigen Muster einer leitfähigen, dehnbaren Tinte und eine externe Schaltung, die das bildmäßige Muster verbindet, wobei die externe Schaltung in der Lage ist, den elektrischen Widerstand über Bereiche des verformbaren, nicht leitfähigen Substrats zu messen und den Grad seiner Verformung zu bestimmen.

Die US 5 311 779 A beschreibt einen druckempfindlichen Sensor, bei dem auf der Oberfläche einer druckempfindlichen und leitfähigen Elastomerfolie ein druckempfindlicher konvexer Abschnitt ausgebildet ist und auf der Rückseite des druckempfindlichen konvexen Abschnitts eine Elektrode angeordnet ist, die es ermöglicht, einen in Richtung parallel oder schräg zur Oberfläche eines druckempfindlichen und leitfähigen Elastomerbauteils wirkenden Druck mit einem leichten Winkel zu erfassen. Zusätzlich wird zur Erzielung einer hohen Nachweisdichte ein Kontakt mit einem flächendefinierten Körper, der eine Druckfläche definiert, hergestellt und ein konvexer Kontaktabschnitt aus dem flächendefinierten Körper herausgeführt, wobei der Kontakt elastisch auf der druckempfindlichen Elastomerplatte abgestützt wird.

Die DE 10 2010 034 717 A1 beschreibt ein Sensorelement, welche über nichtleitende, elastisch verformbare Schichten mit entsprechenden Oberflächen verfügt. Die elastisch verformbaren Abstandhalter sind zwischen nichtleitenden, elastisch verformbaren Schichten angeordnet und miteinander verbunden. Die elastisch verformbaren Abstandhalter sind an den jeweiligen Flächen nichtleitender elastisch verformbarer Schichten so angeordnet, dass sich die Abstandhalter schneiden.

EP 2 698 616 A2 beschreibt einen flächigen kapazitiven volumenkompressiblen und zumindest auf einer seiner äußeren Flächenseiten flexiblen Sensor aus einer flächigen Elastomerfolie und zwei Elektroden zur Messung von Drücken oder Druckverteilungen und/oder Deformationen, in dem sich bei Druckanlegung auf den Sensor die elektrische Kapazität messbar erhöht.

DE 198 59 507 A1 beschreibt einen Membrandruckmittler, wobei zwischen einem Gehäuse und einem Deckel ausgebildeten Hohlraum ist, der von zwei zueinander parallelen Membranen in einen Druckaufnahmeraum zur Beaufschlagung mit einem Fluid mit zu messendem Druck, in einen Entlüftungsraum zwischen den Membranen und in einen meßfluidgefüllten Druckabgaberaum zur Druckweiterleitung an eine Druckmeßeinrichtung unterteilt ist. Die die Membranen bestehen aus einem Perfluoralkoxy-Copolymer und unter Zwischenschaltung einer Kunststoffasereinlage deckungsgleich und profiliert ausgebildet sind. Bei diesem Druckmittler ist die druckaufnahmeseitige Membran mit dem Deckel in unmittelbarer Anlage und es ist ein O-Ring zur Abdichtung des Entlüftungsraums zwischen dem Gehäuse und dem Deckel vorgesehen. Das Gehäuse und der Deckel bestehen aus einem Fluorpolymer.

Eine Aufgabe der vorliegenden Erfindung ist es somit, eine flexible Anordnung zur Erfassung einer Druckverteilung der eingangs beschriebenen Art bereit zu stellen, welche bei möglichst geringen Kosten und einfacher Anwendbarkeit für die Anforderungen von Anwendungen mit hohen Drücken bzw. Kräften und bzw. oder Temperaturen wie z.B. eines Vulkanisationsvorgangs geeignet ist. Zumindest soll eine Alternative zu den bekannten flexiblen Anordnungen zur Erfassung einer Druckverteilung bereitgestellt werden.

Die Aufgabe wird erfindungsgemäß durch eine flexible Sensoranordnung zur Erfassung einer Druckverteilung mit den Merkmalen gemäß Anspruch 1, eine Messanordnung zur Erfassung einer Druckverteilung mit den Merkmalen gemäß Anspruch 9 sowie ein Verfahren zur Erfassung einer Druckverteilung mittels einer derartigen Messanordnung mit den Merkmalen gemäß Anspruch 12 gelöst. Vorteilhafte Weiterbildungen sind in den Unteransprüchen beschrieben.

Der Erfindung liegt dabei die Erkenntnis zugrunde, dass durch die Verwendung von elektrisch leitfähigem Elastomermaterial als Sensormaterial zwischen den Elektroden die Eignung der flexiblen, d.h. biegsamen, Sensoranordnung für die Anwendungen mit hohen Drücken bzw. Kräften und bzw. oder Temperaturen erreicht werden kann. Elektrisch leitfähiges Elastomermaterial kann dabei hohe Drücke und Stauchungen bis über 200 bar aushalten, und dies nach einer mechanischen Konditionierung vor dem Einsatz sogar reversibel. Theoretisch sind für ideal inkompressibles Elastomermaterial sogar Drücke bis 20.000 bar denkbar.

Je nach Wahl der Basis des elektrisch leitfähigen Elastomermaterials wie z.B. Fluorkautschuke (FKM) oder Ethylen-Propylen-Dien-Kautschuke (EPDM) und von Additiven wie z.B. Leitruß oder Kohlenstoffnanoröhren (carbon nanotubes - CNT) sowie deren Anteil lassen sich die sensortechnischen Kerneigenschaften Druckempfindlichkeit und Ansprechverhalten einstellen.

Die Widerstandsdruckkennlinie weist bei Mischungen auf EPDM-Basis mit CNTs als Leitfähigkeitsadditiv und bei Mischungen auf FKM-Basis ein strenges Monotonieverhalten auf, während bei rußgefüllter EPDM-Mischung oder anderen in EP 2 394 623 A1 beschriebenen Elastomergrundlagen eine Dopppeldeutigkeit bei der Zuordnung herrscht, weil die Widerstandsdruckkennlinie hier einen parabelförmigen Verlauf aufweist.

Das Ansprechverhalten ist bei CNT-gefüllten EPDM-basierten Mischungen und FKMbasierten Mischungen deutlich schneller als bei rußgefüllten Mischungen auf EPDM-Basis. Dies ist vorteilhaft, weil die Erfassung des Druck- bzw. Kraftwertes dann schneller erfolgen kann, weil nicht gewartet werden muss, bis der Widerstand der sensoraktiven Schicht nach Anliegen des Drucks auf ein Sättigungsniveau relaxiert.

Besonders druckempfindlich reagiert der Widerstand dabei bei Elastomermaterial auf Basis von FKM-Kautschuk, vorzugsweise FPM-Kautschuk, einem Dipolymer aus Hexafluoropropylen und Vinyliden-Fluorid, mit einer Mooney-Viskosität (ML (1+10, 121 °C)) von 22 Mooney-Einheiten mit 15 phr Leitruß bei peroxidischer Vernetzung, und bei Elastomermaterial auf Basis von EPDM-Kautschuk, vorzugsweise mit 48 Gew.-% Ethylen und mit 7,8 Gew.-% Ethyliden Norboren (ENB) als Dien bei einer Mooney-Viskosität (ML (1+4, 125 °C)) von 28 Mooney-Einheiten mit 50 phr z. B. N550.

Eine besonders gute Druckabhängigkeit bei gleichzeitig schnellem Ansprechverhalten zeigt Elastomermaterial auf Basis von EPDM-Kautschuk in Form von einem Ethylen-Propylen-Kautschuk mit mittlerem Gehalt an ENB (Ethyliden-Norbornen) bei einer Mooney-Viskosität (ML (1+4, 125 °C) von 33 Mooney-Einheiten und 1,54 Vol.-% CNT. Besonders empfindlich auf Druck reagieren elektrisch leitfähige Elastomermaterialien, die über den Gehalt des Leitfähigkeitsadditivs in den Bereich der Perkolationsschwelle gebracht werden

Ferner kann durch die Anwendung des Messprinzips einer Leitfähigkeits- bzw. Widerstandsmessung anstelle von einer kapazitiven Messung der Aufwand an elektrischen Kontaktieren und Verbindungsleitungen reduziert, genauer gesagt etwa halbiert werden, weil sich der elektrische Kreis über die elektrisch leitfähige Schicht zwischen den Kontaktierungselementen schließen lässt.

Diese Messprinzipien der Leitfähigkeits- bzw. Widerstandsmessung werden mit Gleichspannung anstelle von Wechselspannung durchgeführt, so dass durch die Vermeidung der Wechselspannung auch die Entstehung von elektromagnetischen Wechselfeldern vermieden werden kann, welche möglicherweise Probleme der elektromagnetischen Verträglichkeit (EMV) bei der Sensoranordnung, Messanordnung oder auch sonstigen elektronischen Anordnungen auslösen können.

Vorzugsweise weist die elektrisch leitfähige Schicht eine Stärke (Dicke, Ausdehnung in Richtung der Druckeinleitung) kleiner als 6 mm, vorzugsweise kleiner als 2 mm, besonders bevorzugt ca.1,5 mm auf, weil die sensortechnischen Eigenschaften von elektrisch leitfähigem Elastomermaterial nicht linear oder vorhersagbar in einem beliebigen Dickenbereich skalierbar sind.

Gemäß Anspruch 1 weist die elektrisch leitfähige Schicht daher wenigstens ein Elastomermaterial auf Basis von Fluorkautschuk auf. In einer weiteren besonders bevorzugten Ausführungsform weist die elektrisch leitfähige Schicht Elastomermaterial auf Basis von wenigstens 50 phr (parts per hundred parts of rubber) wenigstens eines Fluorkautschuks (FKM) auf. Eine besonders gute elektrische Leitfähigkeit zeigt sich, wenn die elektrisch leitfähige Schicht Elastomermaterial auf Basis von 100 phr FKM aufweist. Die Verwendung von Fluorkautschuk ist dabei vorteilhaft, weil hier eine elektrische Leitfähigkeit des Elastomermaterials ohne signifikante Temperaturabhängigkeit vorliegt.

Gemäß einem weiteren Aspekt der Erfindung ist bzw. sind die ersten Kontaktierungselemente und bzw. oder das zweite Kontaktierungselement bzw. die zweiten Kontaktierungselemente und bzw. oder die elektrisch leitfähige Schicht flexibel ausgebildet. Unter einer Flexibilität ist hierbei eine Dehnbarkeit, Biegsamkeit und bzw. oder Elastizität dieser Elemente einzeln oder in Kombination zu verstehen, so dass die Sensoranordnung auch auf unebenen Oberflächen angeordnet werden und die Unebenheiten ausgleichen kann. Auch kann diese Flexibilität dazu führen, dass die Sensoranordnung eingedrückt werden kann, wodurch sich nicht nur die Stärke der Sensoranordnung sondern auch die Materialeingenschaften der elektrisch leitfähigen Schicht ändern können, und nach Entlastung des Druckes wieder in ihren ursprünglichen Zustand zurückkehrt.

Gemäß einem weiteren Aspekt der Erfindung weisen die ersten Kontaktierungselemente und bzw. oder das zweite Kontaktierungselement bzw. die zweiten Kontaktierungselemente ein Geflecht, Gestrick und bzw. oder Gewirk aus elektrisch leitfähigem Material und bzw. oder ein Element aus elektrisch leitfähigem Vollmaterial, vorzugsweise aus einem metallischen Leiter oder einem elektrisch leitfähigen Elastomermaterial, auf. Mittels Gewebe, Gestrick und oder Gewirk (engl. woven or knitted fabric) kann die Flexibilität bzw. Elastizität dieser Elemente bei gleichzeitiger elektrischer Leitfähigkeit erreicht werden. Ein Element aus Vollmaterial wie z.B. ein metallischer Streifen kann einfacher und günstiger herzustellen und bei ausreichend geringer Dicke dennoch flexibel bzw. elastische sein.

Gemäß Anspruch 1 sind die ersten Kontaktierungselemente und das zweite Kontaktierungselement bzw. die zweiten Kontaktierungselemente senkrecht zueinander und bzw. oder senkrecht zur Richtung der Druckeinleitung angeordnet. Unter der Richtung der Druckeinleitung ist diese zu verstehen, in der die Druckeinleitung bzw. Druckausübung auf die Sensoranordnung im Wesentlichen und bestimmungsgemäß erfolgt. Durch die beschriebene Anordnung der Elemente kann eine bestmögliche flächige Abdeckung mit einander überlagernden Kontaktierungselementen, deren Schnittpunkte Messpunkte bilden, erreicht werden. Die Ausrichtung senkrecht zur Druckrichtung ermöglicht eine bestmögliche Erfassung der Druckverhältnisse.

Gemäß einem weiteren Aspekt der Erfindung überdeckt sich jedes erste Kontaktierungselement mit dem zweiten Kontaktierungselement bzw. mit jedem zweiten Kontaktierungselement in Richtung der Druckeinleitung zumindest teilweise. Hierdurch kann eine Druckeinleitung durch die Paarungen von Kontaktierungselementen bestmöglich erfasst werden.

Gemäß einem weiteren Aspekt der Erfindung weist die Messanordnung wenigstens eine Deckschicht auf, welche der elektrisch leitfähigen Schicht abgewandt auf den ersten Kontaktierungselementen und bzw. oder auf dem zweiten Kontaktierungselement bzw. auf den zweiten Kontaktierungselementen angeordnet ist. Auf diese Weise können die Kontaktierungselemente vor äußeren Einflüssen geschützt werden. Hierdurch sollen Beschädigungen vermieden werden ebenso wie eine elektrische Leitfähigkeit gegenüber anderen Elementen, die die Sensorfunktion einschränken oder sogar verhindern würde. Gemäß einem weiteren Aspekt der Erfindung weist die Messanordnung wenigstens einen Temperatursensor auf metallischer und bzw. oder elastomerer Basis auf, welcher vorzugsweise temperaturempfindlich aber druckunempfindlich ist. Über den Temperatursensor oder auch die Temperatursensoren kann die Temperatur der Messanordnung an einer Stelle oder mehreren Stellen erfassen und zur Kalibrierung der Messanordnung verwendet werden. Diese Kalibrierung kann um so genau erfolgen, desto mehr bzw. gleichmäßig verteilte Temperatursensoren vorhanden sind bzw. ausgewertet werden. Der Temperatursensor ist bzw. die Temperatursensoren sind vorzugsweise temperaturempfindlich aber druckunempfindlich, damit er bzw. sie die Temperatur unabhängig von den Druck- bzw. Kraftverhältnissen erfassen kann bzw. können, die auf die Messanordnung wirken können.

Vorzugsweise werden mehrere Temperatursensoren verwendet und derart verteilt angeordnet, dass eine Temperaturverteilung über die flexible Sensoranordnung erfasst werden kann. Hierdurch kann die flexible Sensoranordnung gleichzeitig zur Erfassung einer Druck- als auch einer Temperaturverteilung verwendet werden, um beide Daten zur Verfügung zu stellen. Die Temperaturwerte werden dann als Ausgabewerte direkt zur Verfügung gestellt. Die Verteilung der Messpunkte der Druckerfassung und der Temperatursensoren kann vergleichbar oder unterschiedlich oder auch in verschiedenen Bereichen der flexiblen Sensoranordnung unterschiedlich sein, je nachdem, mit welcher Dichte die jeweiligen Werte erfasst werden sollen.

Die vorliegende Erfindung laut Anspruch 9 betrifft auch eine Messanordnung zur Erfassung einer Druckverteilung mit einer Sensoranordnung wie zuvor beschrieben und einer Messeinheit, welche eingerichtet ist, eine elektrische Leitfähigkeit zwischen den ersten Kontaktierungselementen und dem zweiten Kontaktierungselement bzw. den zweiten Kontaktierungselementen der Sensoranordnung zu erfassen.

Die Messeinheit kann durch eine Anordnung elektrischer Schaltungen oder durch einen Mikrocontroller oder dergleichen gebildet werden. Die Sensoranordnung und die Messeinheit können als separate Elemente ausgeführt und elektrisch leitfähig verbunden sein oder sie können auch zusammen bzw. ineinander integriert z.B. auf einem gemeinsamen Substrat oder dergleichen vorgesehen sein. Die elektrische Leitfähigkeit bzw. der elektrische Widerstand kann über das Anlegen einer Spannung über eine Paarung von Kontaktierungselementen und des dann fließenden Stromes ermittelt werden.

Gemäß einem Aspekt der Erfindung ist die Messeinheit über eine erste elektrisch leitfähige Verbindung mit den ersten Kontaktierungselementen der Sensoranordnung und über eine zweite elektrisch leitfähige Verbindung mit dem zweiten Kontaktierungselement bzw. den zweiten Kontaktierungselementen der Sensoranordnung verbunden, so dass sich über die elektrisch leitfähige Schicht an einem Messpunkt ein geschlossener elektrischer Kreis ergibt. Hierdurch ist es ausreichend, jedes Kontaktierungselement lediglich auf einer Seite elektrisch leitfähig mit der Messeinheit zu verbinden, wodurch sich gegenüber Sensoranordnungen nach kapazitiven Messprinzipien der Verkabelungsaufwand deutlich reduziert.

Gemäß einem weiteren Aspekt der Erfindung ist die Messeinheit ferner eingerichtet, aus den erfassten elektrischen Leitfähigkeiten eine Druckverteilung zu ermitteln. Diese Auswertung kann in die Messeinheit z.B. als Programmierung integriert sein, so dass direkt das relevante Ergebnis der Messung, nämlich eine Druckverteilung anstelle einer Verteilung von Leitfähigkeits- bzw. Widerstandswerten, ausgegeben werden kann, so dass außerhalb der Messanordnung keine entsprechende Weiterverarbeitung der Messwerte erforderlich ist.

Die vorliegende Erfindung laut Anspruch 12 betrifft auch ein Verfahren zur Erfassung einer Druckverteilung mittels einer Messanordnung wie zuvor beschrieben mit den Schritten:
- Kontaktieren eines einer Mehrzahl von ersten Kontaktierungselementen,
- Kontaktieren eines zweiten Kontaktierungselements,
- Erfassen der elektrischen Leitfähigkeit der Paarung von kontaktierten Kontaktierungselementen,
- Wiederholen der vorherigen Schritte für wenigstens eine weitere Paarung von Kontaktierungselementen, und
- Ermitteln einer Druckverteilung über die Paarungen von Kontaktierungselementen aus den erfassten elektrischen Leitfähigkeiten.

Bei diesem Verfahren wird zunächst für eine erste Paarung von einander in Richtung der Druckeinleitung vorzugsweise direkt gegenüberliegenden Kontaktierungselementen die elektrische Leitfähigkeit bzw. der elektrische Widerstand erfasst. Dann wird dies für eine zweite Paarung wiederholt, wobei vorzugsweise das gleiche zweite Kontaktierungselement verwendet wird. Aus diesen beiden Leitfähigkeitswerten kann dann der Druck an jeder Stelle einer Paarung bestimmt werden, aus dem sich dann eine Druckverteilung in der Richtung der ersten Kontaktierungselemente ergibt.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung einer flexiblen Sensoranordnung zur Erfassung einer Druckverteilung als Explosionsdarstellung;
- Fig. 2: eine perspektivische schematische Darstellung einer flexiblen Sensoranordnung zur Erfassung einer Druckverteilung im zusammengefügten Zustand mit Messeinheit;
- Fig. 3: einen schematischen Ablauf eines erfindungsgemäßen Verfahrens;
- Fig. 4: ein Messdiagramm einer zeitlichen Entwicklung des elektrischen Widerstandes nach einer weggesteuert aufgebrachten Druckbeanspruchung;
- Fig. 5: ein Messdiagramm einer zeitlichen Entwicklung der Sättigung;
- Fig. 6: ein erstes Messdiagramm von elektrischen Widerständen über die Temperatur; und
- Fig. 7: ein zweites Messdiagramm von elektrischen Widerständen über die Temperatur.

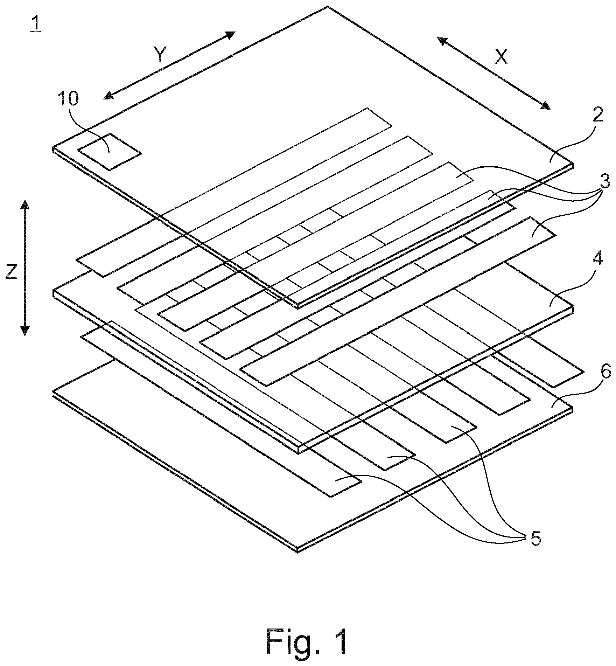

Fig. 1 zeigt eine perspektivische schematische Darstellung einer flexiblen Sensoranordnung 1 zur Erfassung einer Druckverteilung als Explosionsdarstellung. Die flexible Sensoranordnung 1 weist mehrere Schichten oder auch Lagen auf, die in Richtung Z einer Druckeinleitung übereinander angeordnet sind und sich im Wesentlichen in einer Ebene senkrecht zur Richtung Z erstrecken, die durch die senkrecht zueinander stehenden Richtungen X und Y aufgespannt wird.

Genauer gesagt weist die flexible Sensoranordnung 1 in der Mitte eine elektrisch leitfähige Schicht 4 auf. Auf der einen Seite der elektrisch leitfähigen Schicht 4 ist eine erste bzw. obere Kontaktierungsschicht 3 mit einer ersten Mehrzahl von Kontaktierungselementen 31-35 aufgebracht. Auf der anderen gegenüberliegenden Seite der elektrisch leitfähigen Schicht 4 ist eine zweite bzw. untere Kontaktierungsschicht 5 mit einer zweiten Mehrzahl von Kontaktierungselementen 51-55 aufgebracht. Die einzelnen Kontaktierungselemente 31-35, 51-55 verlaufen jeweils parallel zueinander innerhalb ihrer Kontaktierungsschicht 3, 5 und senkrecht zu den Kontaktierungselementen 31-35, 51-55 der jeweils anderen Kontaktierungsschicht 3, 5.

Die flexible Sensoranordnung 1 weist ferner eine erste bzw. obere Deckschicht 2 auf, die der elektrisch leitfähigen Schicht 4 abgewandt auf der ersten bzw. oberen Kontaktierungsschicht 3 angeordnet ist, und eine zweite bzw. untere Deckschicht 6, die der elektrisch leitfähigen Schicht 4 abgewandt auf der zweiten bzw. unteren Kontaktierungsschicht 5 angeordnet ist. Ein Temperatursensor 10 dient der Erfassung der Temperatur zur Kalibrierung der flexiblen Sensoranordnung 1 und bzw. oder als weitere Sensorgröße.

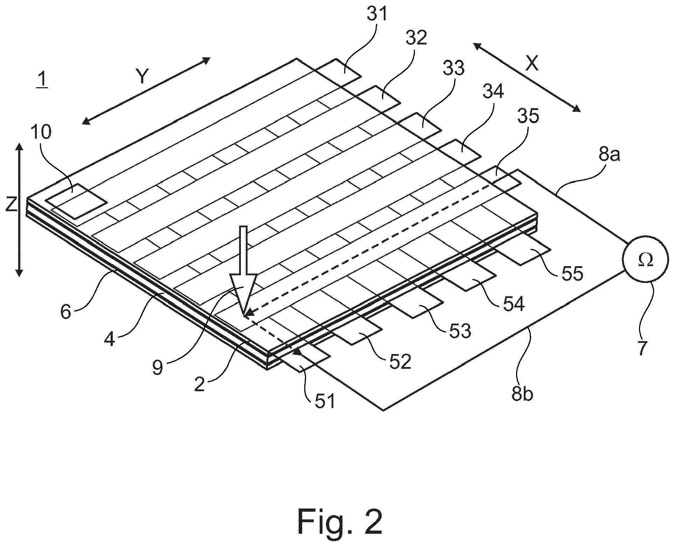

Fig. 2 zeigt eine perspektivische schematische Darstellung einer flexiblen Sensoranordnung 1 zur Erfassung einer Druckverteilung im zusammengefügten Zustand mit Messeinheit 7. Die Kontaktierungselemente 31-35, 51-55 ragen jeweils zu einer Seite aus den Schichten der Sensoranordnung 1 heraus und sind dort jeweils über eine erste bzw. zweite elektrisch leitfähige Verbindung 8a, 8b mit der Messeinheit 7 verbunden. Zur Verbesserung der Übersichtlichkeit ist dabei nur jeweils eine elektrische Verbindung exemplarisch dargestellt, die zu einem Zeitpunkt Gültigkeit hat, an dem hier z.B. die elektrische Leitfähigkeit bzw. der elektrische Widerstand an einem Messpunkt 9 erfasst wird, an dem sich das fünfte Kontaktierungselement 35 der oberen Kontaktierungsschicht 3 und das erste Kontaktierungselement 51 der unteren Kontaktierungsschicht 5 in Richtung Z der Druckeinleitung überschneiden. Somit kann durch diese Schaltungsanordnung der Druck an diesem Messpunkt 9 ermittelt werden.

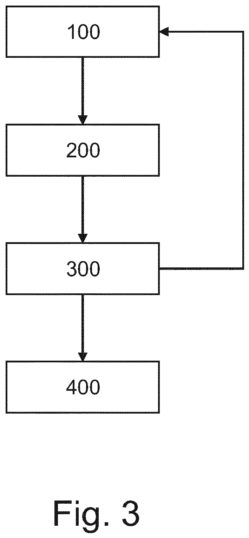

Fig. 3 zeigt einen schematischen Ablauf eines erfindungsgemäßen Verfahrens. In einem ersten Schritt 100 findet ein Kontaktieren eines einer Mehrzahl von ersten Kontaktierungselementen 31-35 der oberen Kontaktierungsschicht 3statt wie z.B. in der Fig. 2 des fünften Kontaktierungselements 35. In einem zweiten Schritt 200 findet ein Kontaktieren eines zweiten Kontaktierungselements 51-55 der unteren Kontaktierungsschicht 5 statt wie z.B. in der Fig. 2 des ersten Kontaktierungselements 51. In einem dritten Schritt 300 wird die elektrische Leitfähigkeit der Paarung von kontaktierten Kontaktierungselementen 35, 51 an diesem Messpunkt 9 erfasst. Diese vorherigen Schritte 100-300 werden nun für wenigstens eine weitere Paarung von Kontaktierungselementen 31-35, 51-55 wiederholt, z.B. für das zweite Kontaktierungselement 52 der unteren Kontaktierungsschicht 5. Aus diesen beiden Messwerten der jeweiligen elektrischen Leitfähigkeit bzw. des elektrischen Widerstands können dann die jeweiligen Druckwerte pro Messpunkt 9 ermittelt und hieraus in einem vierten Schritt 400 einer Druckverteilung über die Paarungen von Kontaktierungselementen 31-35, 51-55 ermittelt werden.

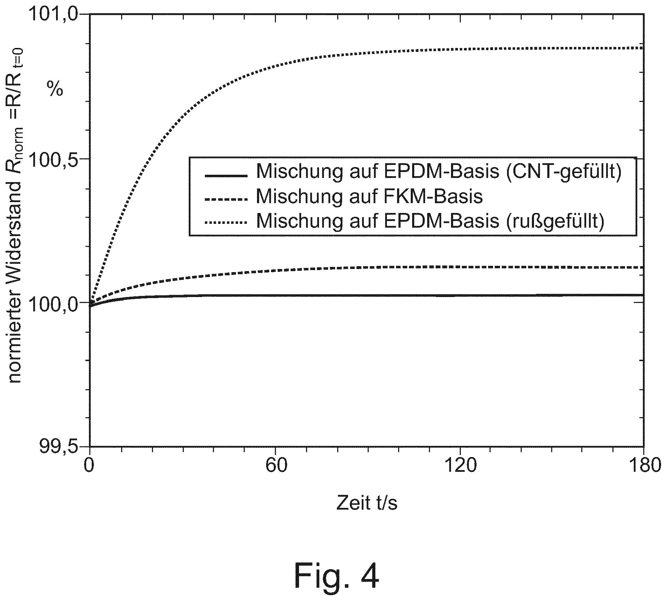

Fig. 4 zeigt ein Messdiagramm einer zeitlichen Entwicklung des elektrischen Widerstandes nach einer weggesteuert aufgebrachten Druckbeanspruchung. Die Druckbeanspruchung liegt bei etwa 4,6 bar. Da die verglichenen Mischungen auf unterschiedlichen Widerstandsniveaus liegen, wird zur besseren Anschaulichkeit der normierte Widerstand dargestellt (bezogen auf den Ausgangswiderstand zur Zeit t = 0). Zu erkennen ist hierbei, dass der normierte Widerstand bei der rußgefüllten Mischung auf EPDM-Basis erst sehr spät einen konstanten Wert einnimmt, der sich bei den erfindungsgemäßen Mischungen auf FKM-Basis und CNT-gefüllter EPDM-Basis deutlich schneller einstellt.

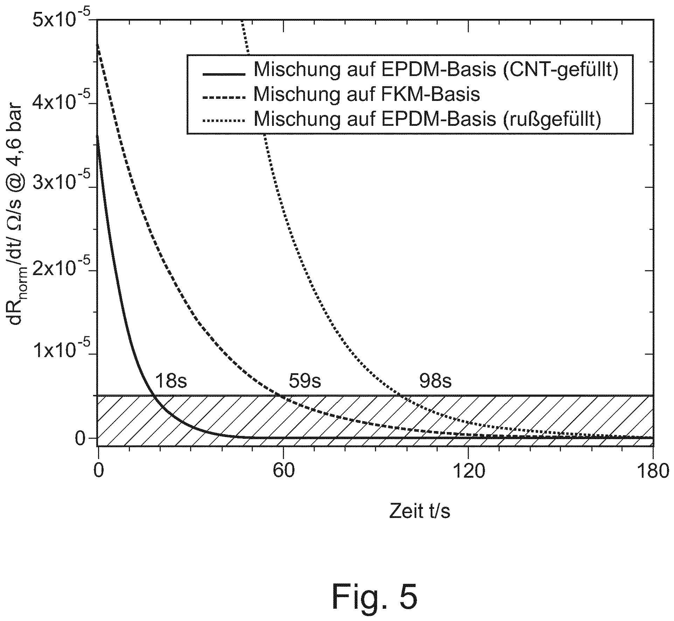

Fig. 5 zeigt ein Messdiagramm einer zeitlichen Entwicklung der Sättigung. Die Sättigung lässt sich darstellen, wenn die zeitliche Änderung des Widerstandes (normiert, d.h. bezogen auf den Ausgangswiderstand zur Zeit t = 0) aufgetragen wird. Eine bevorzugte Sättigungsschwelle ist hier beispielhaft bei 5^{∗}10-5 s-1 gesetzt, so dass sich das Ansprechverhalten der gezeigten Mischungen quantitativ vergleichen lässt. Zu erkennen ist dabei, dass die rußgefüllte Mischung auf EPDM-Basis erst deutlich später die vorbestimmte Sättigungsschwelle erreicht als die erfindungsgemäßen Mischungen auf FKM-Basis und CNT-gefüllter EPDM-Basis.

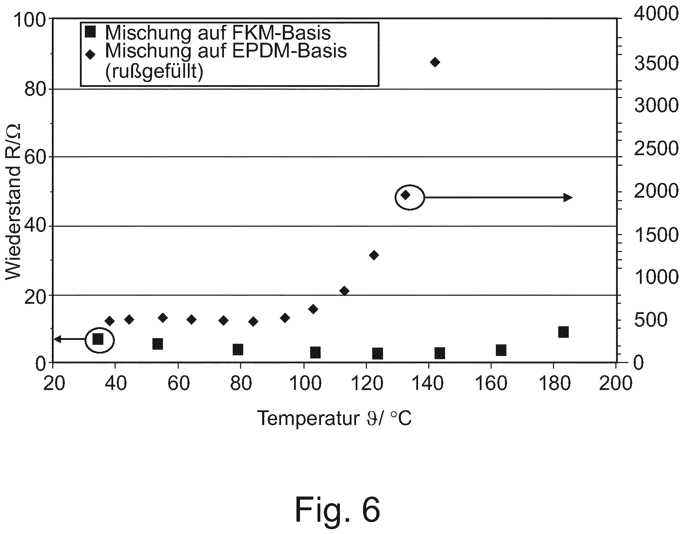

Fig. 6 zeigt ein erstes Messdiagramm von elektrischen Widerständen über die Temperatur. Als Material mit einer elektrischen Leitfähigkeit ohne signifikante Temperaturabhängigkeit wird ein Elastomermaterial auf Basis von FKM-Kautschuk verwendet (Dipolymer aus Hexafluoropropylen und Vinyliden-Fluorid, Mooney-Viskosität: ML (1+10, 121 °C) = 22) mit 15 phr Leitruß (z. B. Ensaco 260 G, Fa. Timcal), peroxidische Vernetzung). Während der elektrische Widerstand der Mischung auf FKM-Basis annähernd konstant bleibt, steigt er bei einer rußgefüllten Mischung auf EPDM-Basis ab einer Temperaturschwelle (im Bsp. Bei ca. 110°C ... 120°C) stark (exponentiell) an. Zu beachten ist die aus Gründen der Übersichtlichkeit gewählte unterschiedliche Ordinatenskalierung für die FKM- und EPDM-basierte Mischung links bzw. rechts, die den Unterschied im Widerstandstemperaturverhalten im Vergleich eher unterschätzend darstellt.

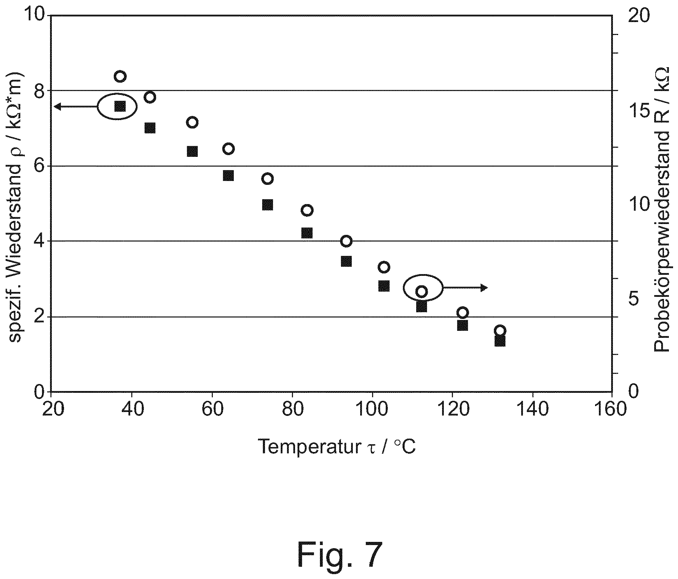

Fig. 7 zeigt ein zweites Messdiagramm von elektrischen Widerständen über die Temperatur. Als Material mit einer elektrischen Leitfähigkeit mit signifikanter Temperaturabhängigkeit wird EPDM verwendet (z. B. Ethylene-propylene-dien-Kautschuk: Ethylen-Propylen-Kautschuk mit mittlerem Gehalt an ENB (Ethyliden-Norbornen), Mooney-Viskosität: ML (1+4, 125 °C) = 33) und 1,54 vol% CNTs (NC7000 Fa. Nanocyl). Mit CNT als Leitfähgikeitsadditiv in EPDM lässt sich eine lineare, mit der Temperatur abnehmende Charakteristik des elektrischen Widerstandes einstellen.

### Bezugszeichenliste

### (Teil der Beschreibung)

- X: X-Richtung der Anordnung 1
- Y: Y-Richtung der Anordnung 1
- Z: Z-Richtung der Anordnung 1, Richtung der Druckeinleitung

- 1: flexible Sensoranordnung zur Erfassung einer Druckverteilung
- 2: erste bzw. obere Deckschicht bzw. Decklage
- 3: erste bzw. obere Kontaktierungsschicht bzw. Kontaktierungslage
- 31-35: erstes bis fünftes Kontaktierungselement der ersten Kontaktierungsschicht 3
- 4: elektrisch leitfähige Schicht bzw. Lage
- 5: zweite bzw. untere Kontaktierungsschicht bzw. Kontaktierungslage
- 51-55: erstes bis fünftes Kontaktierungselement der zweiten Kontaktierungsschicht 5
- 6: zweite bzw. untere Deckschicht bzw. Decklage
- 7: Messeinheit
- 8a: erste elektrisch leitfähige Verbindung zwischen Messeinheit 7 und Kontaktierungselementen 31-35 der ersten Kontaktierungsschicht 3
- 8b: zweite elektrisch leitfähige Verbindung zwischen Messeinheit 7 und Kontaktierungselementen 51-55 der zweiten Kontaktierungsschicht 5
- 9: Messpunkt einer Paarung von Kontaktierungselementen 31-35, 51-55
- 10: Temperatursensor

- 100: Kontaktieren eines einer Mehrzahl von ersten Kontaktierungselementen 31-35
- 200: Kontaktieren eines zweiten Kontaktierungselements 51-55
- 300: Erfassen der elektrischen Leitfähigkeit der Paarung
- 400: Ermitteln einer Druckverteilung über die Paarungen

## Patentansprüche

1. Flexible Sensoranordnung (1) zur Erfassung einer Druckverteilung, **gekennzeichnet durch**
eine ersten Kontaktierungsschicht (3) mit einer Mehrzahl von ersten Kontaktierungselementen (31-35), und durch
eine zweiten Kontaktierungsschicht (5) mit einer Mehrzahl von zweiten Kontaktierungselementen (51-55),
wobei die einzelnen Kontaktierungselemente (31-35, 51-55)
jeweils parallel zueinander innerhalb ihrer Kontaktierungsschicht (3, 5) und jeweils senkrecht zu den Kontaktierungselementen (31-35, 51-55) der jeweils anderen Kontaktierungsschicht (3,
verlaufen,
wobei die erste Kontaktierungsschicht (3) und die zweite Kontaktierungsschicht (5) in Richtung (Z) einer Druckeinleitung übereinander angeordnet sind,
**dadurch gekennzeichnet, dass**
die erste Kontaktierungsschicht (3) und die zweite Kontaktierungsschicht (5) in Richtung (Z) der Druckeinleitung durch eine elektrisch leitfähige Schicht (4) voneinander beabstandet sind,
wobei
die elektrisch leitfähige Schicht (4) wenigstens ein Elastomermaterial auf Basis von Fluorkautschuk oder auf Basis von Ethylen-Propylen-Dien-Kautschuk mit Carbon Nanotubes als Leitfähigkeitsadditiv aufweist.

2. Flexible Sensoranordnung (1) nach Anspruch 1,
wobei die ersten Kontaktierungselemente (31-35) und/oder die zweiten Kontaktierungselemente (51-55) und/oder die elektrisch leitfähige Schicht (4) flexibel ausgebildet ist/sind.

3. Flexible Sensoranordnung (1) nach Anspruch 1 oder 2,
wobei die ersten Kontaktierungselemente (31-35) und/oder die zweiten Kontaktierungselemente (51-55) ein Geflecht, Gestrick und/oder Gewirk aus elektrisch leitfähigem Material und/oder ein Element aus elektrisch leitfähigem Vollmaterial aufweisen.

4. Flexible Sensoranordnung (1) nach Anspruch 3,
wobei die ersten Kontaktierungselemente (31-35) und/oder die zweiten Kontaktierungselemente (51-55) ein Element aus einem metallischen Leiter oder aus einem elektrisch leitfähigen Elastomermaterial aufweisen.

5. Flexible Sensoranordnung (1) nach einem der vorherigen Ansprüche,
wobei sich jedes erste Kontaktierungselement (31-35) mit jedem zweiten Kontaktierungselement (51-55) in Richtung der Druckeinleitung (Z) zumindest teilweise überdeckt.

6. Flexible Sensoranordnung (1) nach einem der vorherigen Ansprüche, ferner mit wenigstens einer Deckschicht (2; 6), welche der elektrisch leitfähigen Schicht (4) abgewandt auf den ersten Kontaktierungselementen (31-35) und/oder auf den zweiten Kontaktierungselementen (51-55) angeordnet ist.

7. Flexible Sensoranordnung (1) nach einem der vorherigen Ansprüche, ferner mit wenigstens einem Temperatursensor (10) auf metallischer und/oder elastomerer Basis.

8. Flexible Sensoranordnung (1) nach Anspruch 7,
wobei der Temperatursensor (10) temperaturempfindlich aber druckunempfindlich ist.

9. Messanordnung zur Erfassung einer Druckverteilung, mit
einer Sensoranordnung (1) nach einem der vorherigen Ansprüche, und
einer Messeinheit (7), welche eingerichtet ist, eine elektrische Leitfähigkeit zwischen den ersten Kontaktierungselementen (31-35) und den zweiten Kontaktierungselementen (51-55) der Sensoranordnung (1) zu erfassen.

10. Messanordnung nach Anspruch 9,
wobei die Messeinheit (7) über eine erste elektrisch leitfähige Verbindung (8a) mit den ersten Kontaktierungselementen (31-35) der Sensoranordnung (1) und über eine zweite elektrisch leitfähige Verbindung (8b) mit den zweiten Kontaktierungselementen (51-55) der Sensoranordnung (1) verbunden ist, so dass sich über die elektrisch leitfähig Schicht (4) an einem Messpunkt (9) ein geschlossener elektrischer Kreis ergibt.

11. Messanordnung nach Anspruch 9 oder 10,
wobei die Messeinheit (7) ferner eingerichtet ist, aus den erfassten elektrischen Leitfähigkeiten eine Druckverteilung zu ermitteln.

12. Verfahren zur Erfassung einer Druckverteilung mittels einer Messanordnung gemäß einem der Ansprüche 9 bis 11, mit den Schritten:
Kontaktieren (100) eines einer Mehrzahl von ersten Kontaktierungselementen (31-35),
Kontaktieren (200) eines einer Mehrzahl von zweiten Kontaktierungselementen (51-55),
Erfassen (300) der elektrischen Leitfähigkeit der Paarung von kontaktierten Kontaktierungselementen (31-35; 51-55),
Wiederholen der vorherigen Schritte (100-300) für wenigstens eine weitere Paarung von Kontaktierungselementen (31-35; 51-55), und
Ermitteln (400) einer Druckverteilung über die Paarungen von Kontaktierungselementen (31-35; 51-55) aus den erfassten elektrischen Leitfähigkeiten.

## Claims

1. Flexible sensor arrangement (1) for detecting a pressure distribution, **characterized by**
a first contact-making layer (3) having a plurality of first contact-making elements (31-35), and by a second contact-making layer (5) having a plurality of second contact-making elements (51-55),
wherein the individual contact-making elements (31-35, 51-55)
each run parallel to one another within their contact-making layer (3, 5) and each run perpendicular to the contact-making elements (31-35, 51-55) of the respective other contact-making layer (3),
wherein the first contact-making layer (3) and the second contact-making layer (5) are arranged above one another in the direction (Z) of an introduction of pressure,
**characterized in that**
the first contact-making layer (3) and the second contact-making layer (5) are spaced apart from one another in the direction (Z) of the introduction of pressure by way of an electrically conductive layer (4),
wherein
the electrically conductive layer (4) comprises at least one elastomeric material based on fluoro rubber or based on ethylene-propylene-diene rubber having carbon nanotubes as conductivity additive.

2. Flexible sensor arrangement (1) according to Claim 1,
wherein the first contact-making elements (31-35) and/or the second contact-making elements (51-55) and/or the electrically conductive layer (4) is/are of flexible form.

3. Flexible sensor arrangement (1) according to Claim 1 or 2,
wherein the first contact-making elements (31-35) and/or the second contact-making elements (51-55) comprise a mesh, braid and/or knit made of electrically conductive material and/or an element made of electrically conductive solid material.

4. Flexible sensor arrangement (1) according to Claim 3,
wherein the first contact-making elements (31-35) and/or the second contact-making elements (51-55) comprise an element made of a metal conductor or made of an electrically conductive elastomer material.

5. Flexible sensor arrangement (1) according to one of the preceding claims,
wherein each first contact-making element (31-35) at least partly overlaps with each second contact-making element (51-55) in the direction of the introduction of pressure (Z).

6. Flexible sensor arrangement (1) according to one of the preceding claims, further having at least one cover layer (2; 6), which is arranged on the first contact-making elements (31-35) and/or on the second contact-making elements (51-55) in a manner facing away from the electrically conductive layer (4).

7. Flexible sensor arrangement (1) according to one of the preceding claims, further having at least one temperature sensor (10) based on a metal and/or elastomer.

8. Flexible sensor arrangement (1) according to Claim 7,
wherein the temperature sensor (10) is sensitive to temperature but insensitive to pressure.

9. Measurement arrangement for detecting a pressure distribution, having
a sensor arrangement (1) according to one of the preceding claims, and
a measurement unit (7), which is configured to detect an electrical conductivity between the first contact-making elements (31-35) and the second contact-making elements (51-55) of the sensor arrangement (1).

10. Measurement arrangement according to Claim 9,
wherein the measurement unit (7) is connected to the first contact-making elements (31-35) of the sensor arrangement (1) via a first electrically conductive connection (8a) and to the second contact-making elements (51-55) of the sensor arrangement (1) via a second electrically conductive connection (8b) such that a closed electrical circuit is produced over the electrically conductive layer (4) at a measurement point (9) .

11. Measurement arrangement according to Claim 9 or 10,
wherein the measurement unit (7) is further configured to ascertain a pressure distribution from the detected electrical conductivities.

12. Method for detecting a pressure distribution by means of a measurement arrangement according to one of Claims 9 to 11, comprising the steps of:
making contact (100) with one of a plurality of first contact-making elements (31-35),
making contact (200) with one of a plurality of second contact-making elements (51-55),
detecting (300) the electrical conductivity of the pairing of contacted contact-making elements (31-35; 51-55),
repeating the previous steps (100-300) for at least one further pairing of contact-making elements (31-35; 51-55), and
ascertaining (400) a pressure distribution via the pairings of contact-making elements (31-35; 51-55) from the detected electrical conductivities.

## Revendications

1. Ensemble flexible de capteurs (1) pour détecter une répartition de pression, **caractérisé par**
une première couche de mise en contact (3) avec une multiplicité de premiers éléments de mise en contact (31-35), et par
une deuxième couche de mise en contact (5) avec une multiplicité de deuxièmes éléments de mise en contact (51-55),
dans lequel les éléments de mise en contact individuels (31-35, 51-55) s'étendent
respectivement parallèlement les uns aux autres à l'intérieur de leur couche de mise en contact (3, 5), et
respectivement perpendiculairement aux éléments de mise en contact (31-35, 51-55) de l'autre couche de mise en contact respective (3,
dans lequel la première couche de mise en contact (3) et la deuxième couche de mise en contact (5) sont disposées l'une au-dessus de l'autre dans la direction (Z) d'une application de pression,
**caractérisé en ce que**
la première couche de mise en contact (3) et la deuxième couche de mise en contact (5) sont espacées l'une de l'autre par une couche électriquement conductrice (4) dans la direction (Z) de l'application de pression,
dans lequel la couche électriquement conductrice (4) présente au moins un matériau élastomère à base de caoutchouc fluoré ou à base de caoutchouc éthylène-propylène-diène avec des nanotubes de carbone comme additif de conductibilité.

2. Ensemble flexible de capteurs (1) selon la revendication 1, dans lequel les premiers éléments de mise en contact (31-35) et/ou les deuxièmes éléments de mise en contact (51-55) et/ou la couche électriquement conductrice (4) est/sont flexible(s).

3. Ensemble flexible de capteurs (1) selon une revendication 1 ou 2, dans lequel les premiers éléments de mise en contact (31-35) et/ou les deuxièmes éléments de mise en contact (51-55) présentent un treillis, un tricot et/ou un tissu à mailles en matériau électriquement conducteur et/ou un élément en matériau plein électriquement conducteur.

4. Ensemble flexible de capteurs (1) selon la revendication 3, dans lequel les premiers éléments de mise en contact (31-35) et/ou les deuxièmes éléments de mise en contact (51-55) présentent un élément en un conducteur métallique ou en un matériau élastomère électriquement conducteur.

5. Ensemble flexible de capteurs (1) selon l'une quelconque des revendications précédentes, dans lequel chaque premier élément de mise en contact (31-35) est au moins en partie recouvert par chaque deuxième élément de mise en contact (51-55) dans la direction de l'application de pression (Z).

6. Ensemble flexible de capteurs (1) selon l'une quelconque des revendications précédentes, en outre avec au moins une couche de recouvrement (2; 6), qui est disposée à l'opposé de la couche électriquement conductrice (4) sur les premiers éléments de mise en contact (31-35) et/ou sur les deuxièmes éléments de mise en contact (51-55).

7. Ensemble flexible de capteurs (1) selon l'une quelconque des revendications précédentes, en outre avec au moins un capteur de température (10) à base métallique et/ou à base élastomère.

8. Ensemble flexible de capteurs (1) selon la revendication 7, dans lequel le capteur de température (10) est sensible à la température mais insensible à la pression.

9. Ensemble de mesure pour détecter une répartition de pression, avec un ensemble de capteurs (1) selon l'une quelconque des revendications précédentes, et une unité de mesure (7), qui est conçue pour détecter une conductibilité électrique entre les premiers éléments de mise en contact (31-35) et les deuxièmes éléments de mise en contact (51-55) de l'ensemble de capteurs (1).

10. Ensemble de mesure selon la revendication 9, dans lequel l'unité de mesure (7) est reliée par une première liaison électriquement conductrice (8a) aux premiers éléments de mise en contact (31-35) de l'ensemble de capteurs (1) et par une deuxième liaison électriquement conductrice (8b) aux deuxièmes éléments de mise en contact (51-55), de telle manière qu'il en résulte un circuit électrique fermé par la couche électriquement conductrice (4) à un point de mesure (9).

11. Ensemble de mesure selon une revendication 9 ou 10, dans lequel l'unité de mesure (7) est en outre conçue pour déterminer une répartition de pression à partir des conductibilités électriques détectées.

12. Procédé pour détecter une répartition de pression au moyen d'un ensemble de capteurs selon l'une quelconque des revendications 9 à 11, comprenant les étapes suivantes:
contacter (100) un d'une multiplicité de premiers éléments de mise en contact (31-35),
contacter (200) un d'une multiplicité de deuxièmes éléments de mise en contact (51-55),
détecter (300) la conductibilité électrique de la paire d'éléments de mise en contact contactés (31-35; 51-55),
répéter les étapes précédentes (100-300) pour au moins une autre paire d'éléments de mise en contact (31-35; 51-55), et
déterminer (400) une répartition de pression par les paires d'éléments de mise en contact (31-35; 51-55) à partir des conductibilités électriques détectées.
